# EUROPEAN PATENT APPLICATION

(11) **EP 3 145 164 A1**
(43) Date of publication of application: **22.03.2017**
(21) Application number: 16188896.1
(22) Date of filing: 15.09.2016
(51) Int. Cl.: H04M 1/57, H04M 1/725, H04M 1/656, G06F 1/16, G06F 3/041

(54) **METHOD AND DEVICE FOR DISPLAYING ANSWER EXTENSION FUNCTION**

(30) Priority: 17.09.2015 CN 201510595610
(71) Applicant: Xiaomi Inc., Beijing 100085 (CN)
(72) Inventor: ZHU, Yin, Haidian District, Beijing 100085 (CN); WANG, Qian, Haidian District, Beijing (CN); LI, Lan, Haidian District, Beijing (CN)
(74) Representative: Kudlek, Franz Thomas

(57) **Abstract**

The present disclosure relates to a method and a device for displaying an answer extension function. The method is applied in a first terminal and includes: displaying a call interface with a second terminal; determining a corresponding answer extension function when detecting an answer extension operation from a user on the call interface; and displaying an application interface corresponding to the answer extension function on the call interface. Thus, with the present disclosure, the corresponding application interface may be displayed on the call interface directly according to the answer extension operation from the user, which is convenient for the user to implement corresponding application, simplifies the user operation, and also satisfies personalized needs of the user, and improves the user experience.

## Description

### TECHNICAL FIELD

The present disclosure generally relates to the communication technology field, and more particularly, to a method and a device for displaying an answer extension function.

### BACKGROUND

With the continuous development of communication technology, smart terminals have been used more widely, and thus users have more and more requirements on the smart terminals. For example, when the user uses the smart terminal to make a phone call, he may need to record call content, and may also need to inform the other party of his location information. In the related art, when the user answers the call, with respect to the user's answer extension demand during the call, it generally needs to move the current call to the background and then open the application corresponding to the answer extension demand.

### SUMMARY

In order to solve problems existing in the related art, the present disclosure provides a method and a device for displaying an answer extension function.

According to a first aspect of the present disclosure, there is provided a method for displaying an answer extension function, applied in a first terminal and including:
displaying a call interface with a second terminal;
determining a corresponding answer extension function when detecting an answer extension operation from a user on the call interface;
displaying an application interface corresponding to the answer extension function on the call interface.

Preferably, determining a corresponding answer extension function when detecting an answer extension operation from a user on the call interface includes:
determining the corresponding answer extension function according to a preset binding relationship between answer extension functions and corresponding answer extension operations, when detecting the answer extension operation from the user on the call interface.

Preferably, the method further includes:
setting at least one answer extension function;
setting the answer extension operation corresponding to the answer extension function;
binding the answer extension function with the corresponding answer extension operation, so as to obtain the preset binding relationship between answer extension functions and corresponding answer extension operations.

Preferably, the answer extension operation includes a sliding operation in a first direction or a sliding operation in a second direction; determining the corresponding answer extension function according to a preset binding relationship between answer extension functions and corresponding answer extension operations includes:
determining the answer extension function as a first answer extension function according to the preset binding relationship, when the answer extension operation is the sliding operation in the first direction;
determining the answer extension function as a second answer extension function according to the preset binding relationship, when the answer extension operation is the sliding operation in the second direction,
in which, the first answer extension function is an information recording function and the second answer extension function is a location sharing function; or the first answer extension function is the location sharing function and the second answer extension function is the information recording function.

Preferably, displaying an application interface corresponding to the answer extension function on the call interface includes:
calling the answer extension function via an open extension function interface on the call interface, and displaying the application interface corresponding to the answer extension function on the call interface.

Preferably, the answer extension function is the information recording function; calling the answer extension function via an open extension function interface on the call interface and displaying the application interface corresponding to the answer extension function on the call interface includes:
calling the information recording function via an open information recording interface on the call interface, and displaying an information recording interface corresponding to the information recording function on the call interface.

Preferably, the method further includes:
after displaying the application interface corresponding to the answer extension function on the call interface, storing information recorded in the information recording interface into a note and performing a note reminder when detecting that the call with the second terminal ends.

Preferably, the answer extension function is the location sharing function; calling the answer extension function via an open extension function interface on the call interface and displaying the application interface corresponding to the answer extension function on the call interface includes:
calling the location sharing function via an open location sharing interface on the call interface, and displaying a location sharing interface corresponding to the location sharing function on the call interface.

Preferably, the method further includes:
after displaying the location sharing interface corresponding to the location sharing function on the call interface, sending first location sharing information to the second terminal via the location sharing interface when determining location sharing, in which the first location sharing information carries a geographic location of the first terminal.

Preferably, the method further includes:
after displaying the location sharing interface corresponding to the location sharing function on the call interface, receiving second location sharing information sent by the second terminal, in which the second location sharing information carries a geographic location of the second terminal;
displaying the geographic location of the second terminal on the location sharing interface.

Preferably, displaying the geographic location of the second terminal on the location sharing interface includes:
performing a sharing prompt according to the second location sharing information, in which the sharing prompt includes accepting sharing and refusing sharing;
displaying the geographic location of the second terminal on the location sharing interface, when determining the accepting sharing.

According to a second aspect of the present disclosure, there is provided a device for displaying an answer extension function, applied in a first terminal and including:
a first displaying module, configured to display a call interface with a second terminal;
an answer extension function determining module, configured to determine a corresponding answer extension function when an answer extension operation from a user on the call interface is detected;
a second displaying module, configured to display an application interface corresponding to the answer extension function on the call interface.

Preferably, the answer extension function determining module includes:
a first answer extension function determining sub-module, configured to determine the corresponding answer extension function according to a preset binding relationship between answer extension functions and corresponding answer extension operations, when the answer extension operation from the user on the call interface is detected.

Preferably, the device further includes:
a first setting module, configured to set at least one answer extension function;
a second setting module, configured to set the answer extension operation corresponding to the answer extension function;
a binding module, configured to bind the answer extension function with the corresponding answer extension operation, so as to obtain the preset binding relationship between answer extension functions and corresponding answer extension operations.

Preferably, the answer extension operation includes a sliding operation in a first direction or a sliding operation in a second direction; the first answer extension function determining sub-module includes:
a second answer extension function determining sub-module, configured to determine the answer extension function as a first answer extension function according to the preset binding relationship, when the answer extension operation is the sliding operation in the first direction;
a third answer extension function determining sub-module, configured to determine the answer extension function as a second answer extension function according to the preset binding relationship, when the answer extension operation is the sliding operation in the second direction,
in which, the first answer extension function is an information recording function and the second answer extension function is a location sharing function; or the first answer extension function is the location sharing function and the second answer extension function is the information recording function.

Preferably, the second displaying module includes:
a first displaying sub-module, configured to call the answer extension function via an open extension function interface on the call interface, and to display the application interface corresponding to the answer extension function on the call interface.

Preferably, the answer extension function is the information recording function, and the first displaying sub-module includes:
a second displaying sub-module, configured to call the information recording function via an open information recording interface on the call interface, and to display an information recording interface corresponding to the information recording function on the call interface.

Preferably, the first displaying sub-module further includes:
a storing sub-module, configured to store information recorded in the information recording interface into a note and to perform a note reminder when it is detected that the call with the second terminal ends.

Preferably, the answer extension function is the location sharing function and the first displaying sub-module includes:
a third displaying sub-module, configured to call the location sharing function via an open location sharing interface on the call interface, and to display a location sharing interface corresponding to the location sharing function on the call interface.

Preferably, the first displaying sub-module further includes:
a sending sub-module, configured to send first location sharing information to the second terminal via the location sharing interface when location sharing is determined, in which the first location sharing information carries a geographic location of the first terminal.

Preferably, the first displaying sub-module further includes:
a receiving sub-module, configured to receive second location sharing information sent by the second terminal, in which the second location sharing information carries a geographic location of the second terminal;
a fourth displaying sub-module, configured to display the geographic location of the second terminal on the location sharing interface.

Preferably, the fourth displaying sub-module includes:
a sharing prompt sub-module, configured to perform a sharing prompt according to the second location sharing information, in which the sharing prompt includes accepting sharing and refusing sharing;
a fifth displaying sub-module, configured to display the geographic location of the second terminal on the location sharing interface, when the accepting sharing is determined.

According to a further aspect of the present disclosure, there is provided a program product having stored therein instructions that, when executed by one or more processors of a device, causes the device to perform a method for displaying an answer extension function, the method including:
displaying a call interface with a second terminal;
determining a corresponding answer extension function when detecting an answer extension operation from a user on the call interface;
displaying an application interface corresponding to the answer extension function on the call interface.

The technical solutions provided by embodiments of the present disclosure may have the following advantageous effects.

In the present disclosure, when the first terminal receives the call from the second terminal, the call interface with the second terminal is displayed; when the answer extension operation from the user on the call interface is detected, the corresponding answer extension function may be determined, and the application interface corresponding to the answer extension function may be displayed on the call interface, such that the first terminal may directly display the corresponding application interface on the call interface according to the answer extension operation of the user, which is convenient for the user to implement corresponding application, simplifies the user operation, and also satisfies personalized needs of the user, and improves the user experience.

In the present disclosure, the first terminal may set different answer extension functions and corresponding answer extension operations, and bind the answer extension function with the corresponding answer extension operation, so as to obtain the preset biding relationship and determine the answer extension function corresponding to the detected answer extension operation according to the preset binding relationship, such that the first terminal may quickly determine the type of the answer extension function, thus enhancing the speed of displaying the answer extension function.

In the present disclosure, when the first terminal detects the sliding operation in the first direction or the sliding operation in the second direction, it may determine the corresponding answer extension function as the information recording function or the location sharing function according to the preset binding relationship, such that the first terminal may display the corresponding application interface on the call interface according to the user's shortcut operation, i.e., the sliding operation in the first direction or the sliding operation in the second direction, which is convenient for the user to implement the corresponding application, and improves the user experience.

In the present disclosure, the first terminal may call the answer extension function via the open extension function interface on the call interface and display the application interface corresponding to the answer extension function on the call interface, which is convenient for the user to realize the answer extension function and improves the user experience.

In the present disclosure, the first terminal may call the information recording function via the open information recording interface on the call interface and display the information recording interface corresponding to the information recording function on the call interface, such that the first terminal may provide note service to the user, which satisfies the user's note-taking demand and improves the user experience.

In the present disclosure, the first terminal may call the location sharing function via the open location sharing interface on the call interface and display the location sharing interface corresponding to the location sharing function on the call interface, which satisfies the user's location sharing demand and improves the user experience.

In the present disclosure, the first terminal may send the first location sharing information to the second terminal, the first location sharing information carrying the location information of the first terminal, and may also receive the second location sharing information sent by the second terminal, the second location sharing information carrying the geographic location of the second terminal, and display the geographic location of the second terminal on the location sharing interface, such that the first terminal may realize the location sharing with the second terminal according to the user demand, and display the geographic location of the second terminal visually in the location sharing interface, which further improves the user experience.

It is to be understood that both the foregoing general description and the following detailed description are exemplary and explanatory only and are not restrictive of the scope of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for displaying an answer extension function according to an exemplary embodiment;
Fig. 2 is a flow chart of another method for displaying an answer extension function according to an exemplary embodiment;
Fig. 3 is a flow chart of another method for displaying an answer extension function according to an exemplary embodiment;
Fig. 4 is a flow chart of another method for displaying an answer extension function according to an exemplary embodiment;
Fig. 5A is a flow chart of another method for displaying an answer extension function according to an exemplary embodiment;
Fig. 5B is a flow chart of another method for displaying an answer extension function according to an exemplary embodiment;
Fig. 6 is a flow chart of another method for displaying an answer extension function according to an exemplary embodiment;
Fig. 7A is a schematic diagram showing an application scenario in which a method for displaying an answer extension function is applied according to an exemplary embodiment;
Fig. 7B is a schematic diagram showing a call interface in a method for displaying an answer extension function according to an exemplary embodiment;
Fig. 7C is a schematic diagram showing a phone note in a method for displaying an answer extension function according to an exemplary embodiment;
Fig. 7D is a schematic diagram showing a note reminder in a method for displaying an answer extension function according to an exemplary embodiment;
Fig. 7E is a schematic diagram showing a first location sharing interface in a method for displaying an answer extension function according to an exemplary embodiment;
Fig. 7F is a schematic diagram showing a sharing prompt in a method for displaying an answer extension function according to an exemplary embodiment;
Fig. 7G is a schematic diagram showing a second location sharing interface in a method for displaying an answer extension function according to an exemplary embodiment;
Fig. 8 is a block diagram of a device for displaying an answer extension function according to an exemplary embodiment;
Fig. 9A is a block diagram of another device for displaying an answer extension function according to an exemplary embodiment;
Fig. 9B is a block diagram of another device for displaying an answer extension function according to an exemplary embodiment;
Fig. 10 is a block diagram of another device for displaying an answer extension function according to an exemplary embodiment;
Fig. 11 is a block diagram of another device for displaying an answer extension function according to an exemplary embodiment;
Fig. 12A is a block diagram of another device for displaying an answer extension function according to an exemplary embodiment;
Fig. 12B is a block diagram of another device for displaying an answer extension function according to an exemplary embodiment;
Fig. 13 is a block diagram of another device for displaying an answer extension function according to an exemplary embodiment;
Fig. 14 is a block diagram of another device for displaying an answer extension function according to an exemplary embodiment;
Fig. 15 is a block diagram of another device for displaying an answer extension function according to an exemplary embodiment;
Fig. 16 is a block diagram of another device for displaying an answer extension function according to an exemplary embodiment;
Fig. 17 is a block diagram of a device for displaying an answer extension function according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It should be understood that, although terms such as "first," "second" and "third" are used herein for describing various information, these information should not be limited by these terms. These terms are only used for distinguishing information of the same type. For example, first information may also be called second information, and similarly, the second information may also be called the first information, without departing from the scope of the present disclosure. As used herein, the term "if" may be construed to mean "when" or "upon" or "in response to determining" depending on the context.

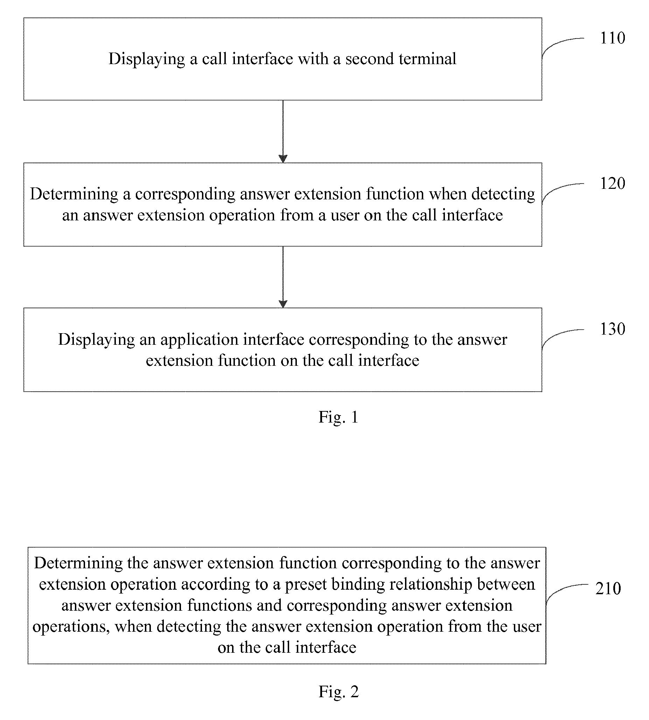

Fig. 1 is a flow chart of a method for displaying an answer extension function according to an exemplary embodiment. As shown in Fig. 1, the method may be applied in a first terminal, and includes the following steps.

In step 110, a call interface with a second terminal is displayed.

The first terminal or the second terminal in the present disclosure may be any smart terminal having the internet function, for example, a mobile phone, a tablet computer, a personal digital assistant (PDA), a personal computer (PC), etc. The terminal may access the router via the wireless local area network, and access servers in the public network via the router.

In this embodiment, when the first terminal receives the call from the second terminal, the display of the first terminal will display the call interface between the first terminal and the second terminal.

In step 120, a corresponding answer extension function is determined when an answer extension operation from a user on the call interface is detected.

In this embodiment, during the call between the first terminal and the second terminal, the user of the first terminal may have various answer extension demands. For example, the user may need to record call content, and may also need to inform the other part of his location information. For this end, with respect to the various answer extension demands of the user, the first terminal may provide corresponding answer extension functions to the user, and trigger the answer extension function via the answer extension operation corresponding to the answer extension function.

The answer extension operation may be the user's sliding operation, or other operations. If the answer extension operation is the user's sliding operation, it may be any one of sliding leftwards, sliding rightwards, sliding upwards and sliding downwards.

For example, if the user needs to record call content, the user may slide leftwards on the call interface, thus triggering the corresponding information recording function.

In step 130, an application interface corresponding to the answer extension function is displayed on the call interface.

In the present disclosure, after the answer extension function corresponding to the user's answer extension operation is determined, the corresponding interface may be directly displayed on the call interface.

For example, if the answer extension function is determined as the information recording function, the information recording interface (i.e., the note-taking interface) may be displayed on the call interface, which is convenient for the user to record information during the call.

It may be seen from the above embodiment that, after the first terminal answers the call from the second terminal, the call interface with the second terminal is displayed. When the user's answer extension operation on the call interface is detected, the corresponding answer extension function may be determined, and the application interface corresponding to the answer extension function may be displayed on the call interface, such that the first terminal may directly display the corresponding application interface on the call interface according to the answer extension operation of the user, which is convenient for the user to implement corresponding application, simplifies the user operation, and also satisfies personalized needs of the user, and improves the user experience.

Fig. 2 is a flow chart of another method for displaying an answer extension function according to an exemplary embodiment. As shown in Fig. 2, the method may be applied in a first terminal, and based on the method shown in Fig. 1, in step 120, determining the corresponding answer extension function when detecting the answer extension operation from the user on the call interface may include following steps.

In step 210, the answer extension function corresponding to the detected answer extension operation is determined according to a preset binding relationship between answer extension functions and corresponding answer extension operations, when the answer extension operation from the user on the call interface is detected.

The preset binding relationship between answer extension functions and corresponding answer extension operations is set by the first terminal in advance, which includes following steps:
(1) At least one answer extension function is set.
   In the present disclosure, the first terminal may set a plurality of answer extension functions, such as the information recording function and the location sharing function.
(2) The answer extension operation corresponding to the answer extension function is set.
   In the present disclosure, the first terminal may set the answer extension operation corresponding to the answer extension function according to its own design demand or according to the user's usage habits.
   For example, the answer extension operation corresponding to the information recording function is set as sliding leftwards, and the answer extension operation corresponding to the location sharing function is set as sliding rightwards.
(3) The answer extension function is bound with the corresponding answer extension operation, so as to obtain the preset binding relationship between answer extension functions and corresponding answer extension operations.

In the present disclosure, the preset binding relationship may be stored in the local database in form of table.

For example, the sliding leftwards in the answer extension operations is bound with the information recording function, and the sliding rightwards in the answer extension operations is bound with the location sharing function, as shown in Table 1.

**Table 1**

| terminal names | answer extension operations | answer extension functions |
|---|---|---|
| first terminal | sliding leftwards | information recording function |
| first terminal | sliding rightwards | location sharing function |
| ... | ... | ... |

In addition, the answer extension operation in the present disclosure may not only be the sliding operation, such as sliding leftwards, rightwards or upwards, but may also be the click operation. In the present disclosure, the specific form of the answer extension operation is not limited, as long as the correspondence between answer extension operations and answer extension functions is set in advance.

It may be seen from the above embodiment that, the first terminal may set different answer extension functions and corresponding answer extension operations, and bind the answer extension function with the corresponding answer extension operation, so as to obtain the preset biding relationship and determine the answer extension function corresponding to the detected answer extension operation according to the preset binding relationship, such that the first terminal may quickly determine the type of the answer extension function, thus enhancing the speed of displaying the answer extension function.

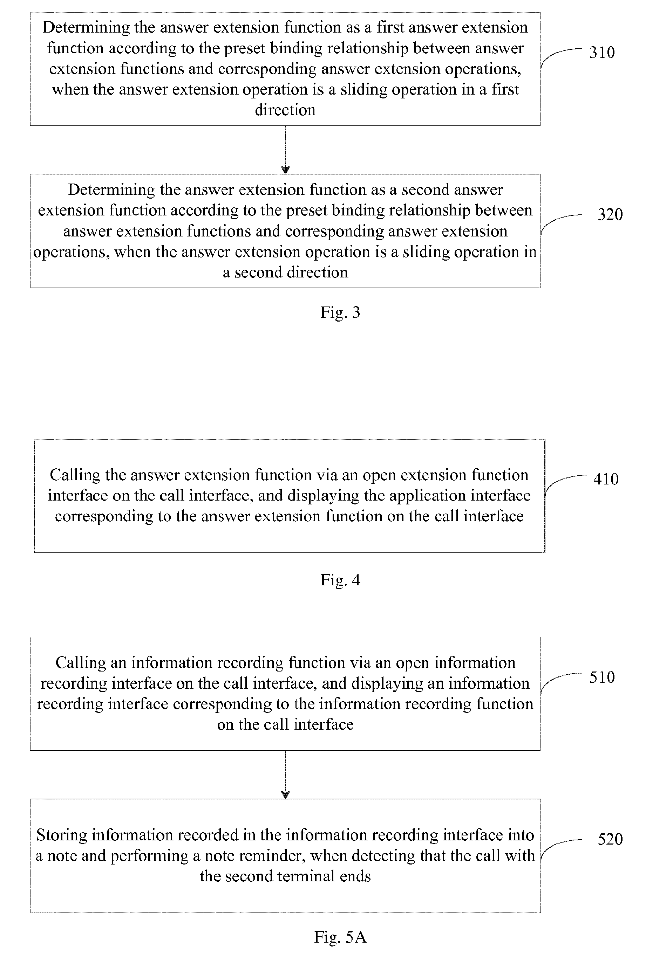

Fig. 3 is a flow chart of another method for displaying an answer extension function according to an exemplary embodiment. As shown in Fig. 3, the method may be applied in a first terminal, and based on the method shown in Fig. 2 and the fact that the answer extension operation detected by the first terminal includes the sliding operation in the first direction or the sliding operation in the second direction, for example, the first direction is leftwards and the second direction is rightwards, determining the corresponding answer extension function according to the preset binding relationship between answer extension functions and corresponding answer extension operations in step 210 may also include following steps.

In step 310, when the answer extension operation is the sliding operation in the first direction, the answer extension function determined according to the preset binding relationship between answer extension functions and corresponding answer extension operations is the first answer extension function.

In step 320, when the answer extension operation is the sliding operation in the second direction, the answer extension function determined according to the preset binding relationship between answer extension functions and corresponding answer extension operations is the second answer extension function.

The first answer extension function is the information recording function and the second answer extension function is the location sharing function. Alternatively, the first answer extension function is the location sharing function and the second answer extension function is the information recording function.

It may been seen from the above embodiment that, when the first terminal detects the sliding operation in the first direction or the sliding operation in the second direction, it may determine the corresponding answer extension function as the information recording function or the location sharing function according to the preset binding relationship, such that the first terminal may display the corresponding application interface on the call interface according to the user's shortcut operation, i.e., the sliding operation in the first direction or the sliding operation in the second direction, which is convenient for the user to implement the corresponding application, and improves the user experience.

Fig. 4 is a flow chart of another method for displaying an answer extension function according to an exemplary embodiment. As shown in Fig. 4, the method may be applied in a first terminal and based on the method shown in Fig. 1, displaying the application interface corresponding to the answer extension function on the call interface in step 130 may include following steps.

In step 410, the answer extension function is called via the open extension function interface on the call interface, and the application interface corresponding to the answer extension function is displayed on the call interface.

In the present disclosure, the application interface corresponding to the answer extension function is displayed on the call interface, in which the application interface includes the answer extension interface, and the answer extension interface is configured to execute the corresponding answer extension function.

It may be seen from the above embodiment that, the first terminal may call the answer extension function via the open extension function interface on the call interface and display the application interface corresponding to the answer extension function on the call interface, such that the user may realize the answer extension function via the extension function interface, which is convenient for the user to realize the answer extension function and improves the user experience.

Fig. 5A is a flow chart of another method for displaying an answer extension function according to an exemplary embodiment. As shown in Fig. 5A, the method may be applied in the first terminal, and based on the method shown in Fig. 3 or 4, the answer extension function determined is the information recording function, and calling the answer extension function via the open extension function interface on the call interface and displaying the application interface corresponding to the answer extension function on the call interface in step 410 may include following steps.

In step 510, the information recording function is called via an open information recording interface on the call interface, and an information recording interface corresponding to the information recording function is displayed on the call interface.

In addition, after executing displaying the information recording interface corresponding to the information recording function on the call interface in step 510, the method may further include following steps.

In step 510, after it is detected that the call with the second terminal ends, the information recorded in the information recording interface is stored in a note, and a note reminder is performed.

It may be seen from the above embodiment that, the first terminal may call the information recording function via the open information recording interface on the call interface and display the information recording interface corresponding to the information recording function on the call interface, such that the first terminal may provide note service to the user, which satisfies the user's note-taking demand and improves the user experience.

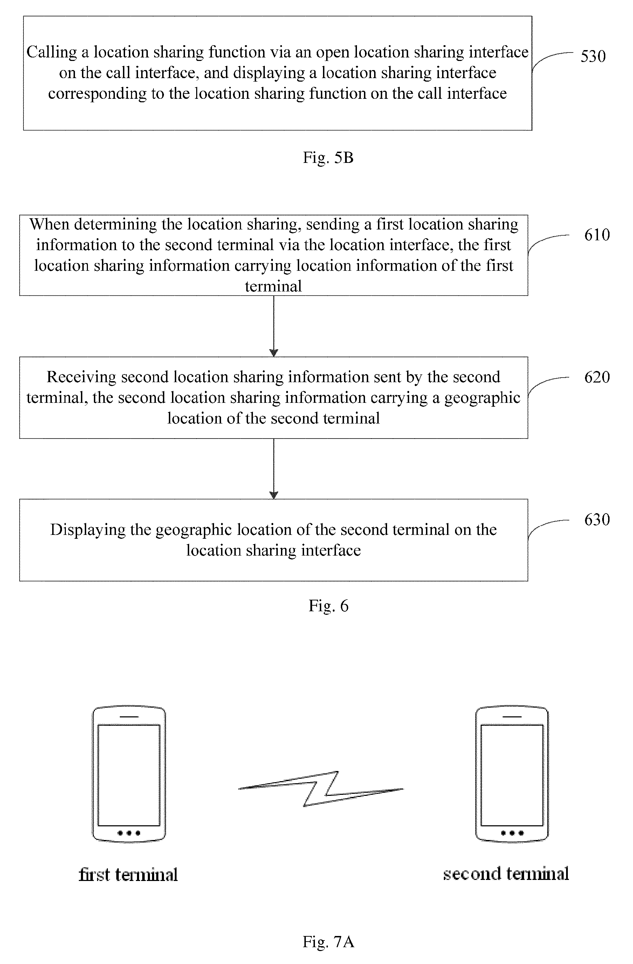

Fig. 5B is a flow chart of another method for displaying an answer extension function according to an exemplary embodiment. As shown in Fig. 5B, the method may be applied in the first terminal, and based on the method shown in Fig. 3 or 4, the answer extension function determined is the location sharing function, and calling the answer extension function via the open extension function interface on the call interface and displaying the application interface corresponding to the answer extension function on the call interface in step 410 may include following steps.

In step 530, the location sharing function is called via an open location sharing interface on the call interface, and a location sharing interface corresponding to the location sharing function is displayed on the call interface.

It may be seen from the above embodiment that, the first terminal may call the location sharing function via the open location sharing interface on the call interface and display the location sharing interface corresponding to the location sharing function on the call interface, which satisfies the user's location sharing demand and improves the user experience.

Fig. 6 is a flow chart of another method for displaying an answer extension function according to an exemplary embodiment. As shown in Fig. 6, the method may be applied in the first terminal, and based on the method shown in Fig. 5B, the answer extension function determined is the location sharing function, and after executing displaying the location sharing interface corresponding to the location sharing function on the call interface in step 530, the method may further include following steps.

In step 610, when the location sharing is determined, first location sharing information is sent to the second terminal via the location sharing interface, in which the first location sharing information carries a location information of the first terminal.

In step 620, second location sharing information sent by the second terminal is received, in which the second location sharing information carries a geographic location of the second terminal.

In step 630, the geographic location of the second terminal is displayed on the location sharing interface.

In an embodiment, after executing displaying the location sharing interface corresponding to the location sharing function on the call interface in step 530, step 610 is then executed, and the procedure ends.

In an embodiment, after executing displaying the location sharing interface corresponding to the location sharing function on the call interface in step 530, steps 620 and 630 are then executed, and the procedure ends.

In an embodiment, in order to better satisfy the answer extension demand of the user, a sharing prompt may be first performed according to the second location sharing information when displaying the geographic location of the second terminal on the location sharing interface in step 630 is executed, in which the sharing prompt include accepting sharing and refusing sharing. When the accepting sharing is determined, the geographic location of the second terminal is displayed on the location sharing interface.

It may be seen from the above embodiment that, the first terminal may send the first location sharing information to the second terminal, the first location sharing information carrying the location information of the first terminal, and may also receive the second location sharing information sent by the second terminal, the second location sharing information carrying the geographic location of the second terminal, and display the geographic location of the second terminal on the location sharing interface, such that the first terminal may realize the location sharing with the second terminal according to the user demand, and display the geographic location of the second terminal visually in the location sharing interface, which further improves the user experience.

Fig. 7A is a schematic diagram showing an application scenario in which a method for displaying an answer extension function according to an exemplary embodiment is applied. The application scenario includes a first terminal and a second terminal.

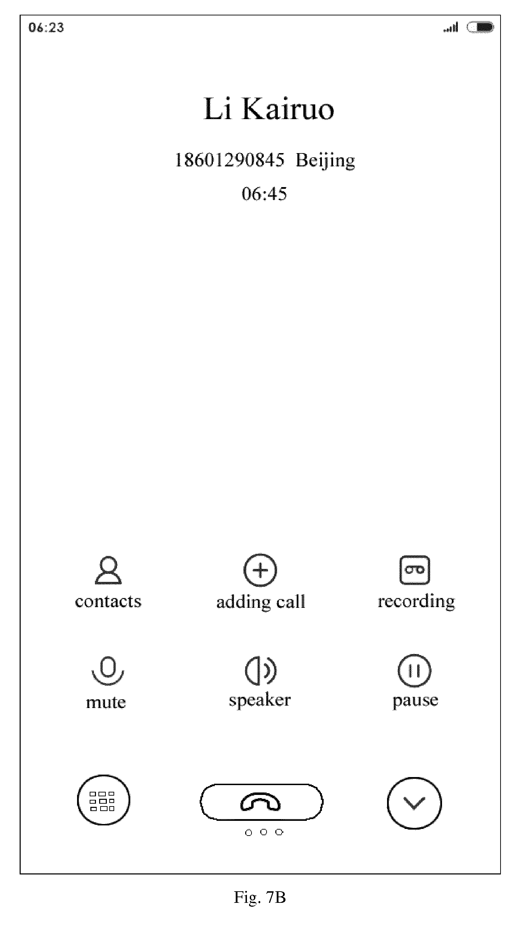

After receiving the call from the second terminal, the first terminal displays the call interface with the second terminal, as shown in Fig. 7B.

First scenario: the user needs to record information.

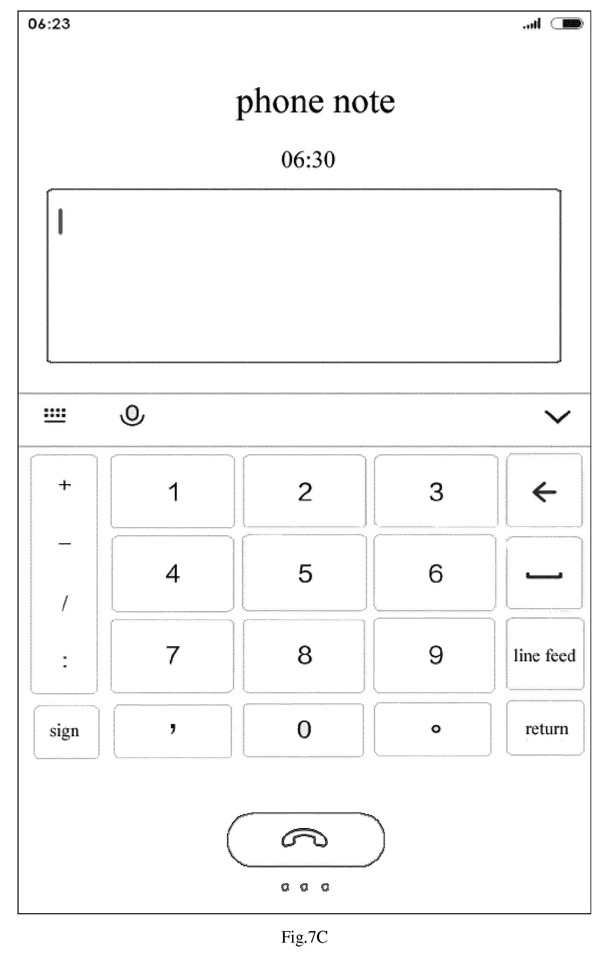

When the first terminal detects the leftward sliding operation of the user on the call interface, it determines the corresponding extension function as the information recording function according to the leftward sliding operation, and displays the information recording interface (for example, the phone note) corresponding to the information recording function on the call interface, as shown in Fig. 7C. The user may enter the information to be recorded in the information recording interface.

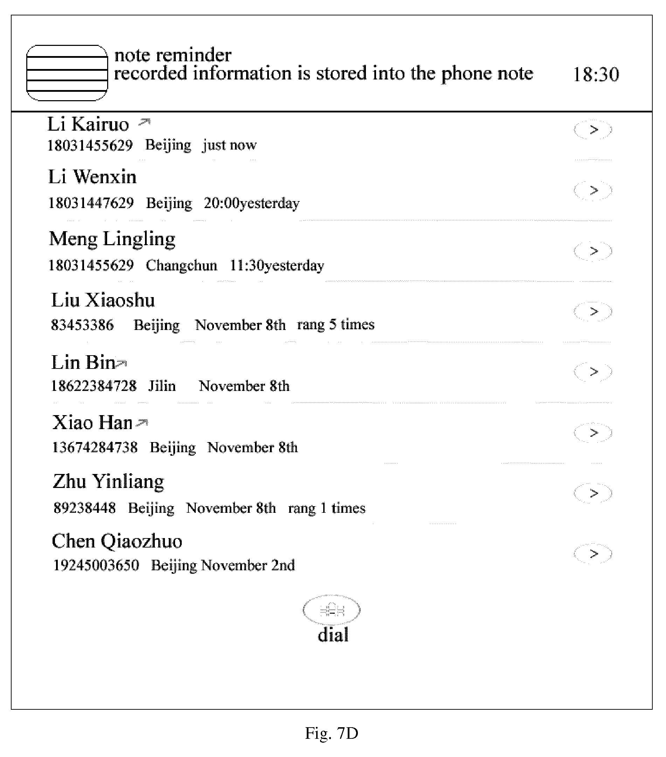

When detecting that the call with the second terminal ends, the first terminal stores the information recorded in the information recording interface into a note and performs a note reminder, as shown in Fig. 7D.

Second scenario: the user needs location sharing.

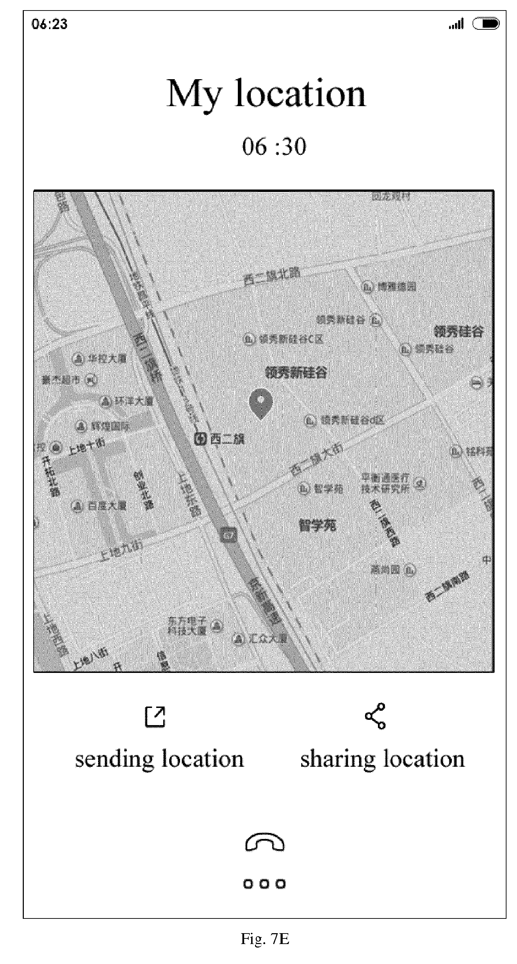

When the first terminal detects the rightward sliding operation of the user on the call interface, it determines the corresponding extension function as the location sharing function according to the rightward sliding operation and displays the location sharing interface corresponding to the location sharing function on the call interface, in which the location sharing interface includes the location information of the first terminal and the location sharing interface, as shown in Fig. 7E.

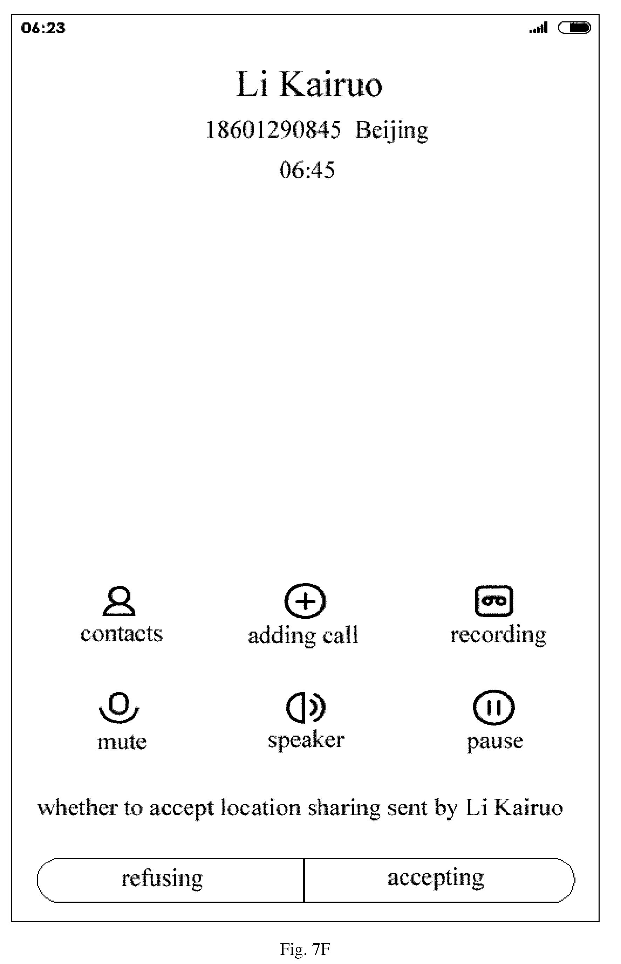

The first terminal receives the second location sharing information sent by the second terminal and performs a sharing prompt according to the second location sharing information, in which the second location sharing information includes the geographic location of the second terminal, and the sharing prompt includes accepting sharing and refusing sharing, as shown in Fig. 7F.

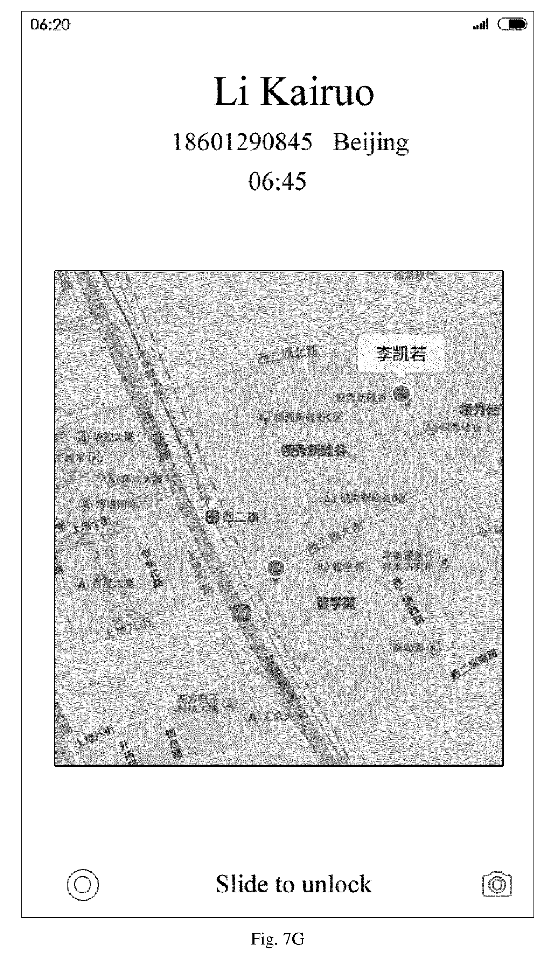

When the user determines to accept sharing, the geographic location of the second terminal is displayed on the location sharing interface, as shown in Fig. 7G.

Corresponding to the above embodiments of the method for displaying the answer extension function, the present disclosure also provides a device for displaying an answer extension function.

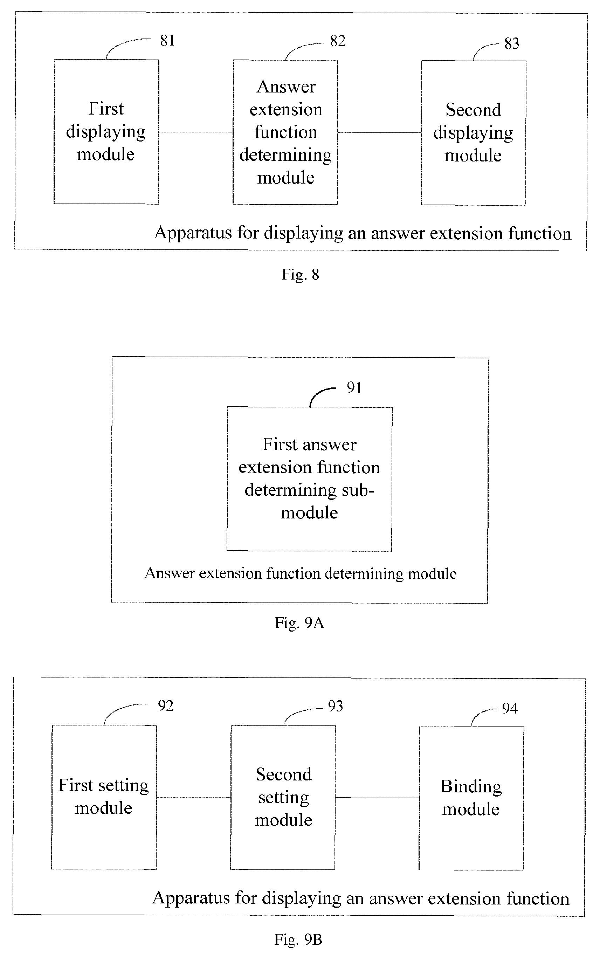

Fig. 8 is a block diagram of a device for displaying an answer extension function according to an exemplary embodiment. As shown in Fig. 8, the device is applied in the first terminal and configured for executing the method for displaying the answer extension function shown in Fig. 1. The device includes a first displaying module 81, an answer extension function determining module 82 and a second displaying module 83.

The first displaying module 81 is configured to display a call interface with a second terminal.

The answer extension function determining module 82 is configured to determine a corresponding answer extension function when an answer extension operation from a user on the call interface is detected.

The second displaying module 83 is configured to display an application interface corresponding to the answer extension function on the call interface.

It may be seen from the above embodiment that, by displaying the call interface with the second terminal, the corresponding answer extension function may be determined when the answer extension operation from the user on the call interface is detected, and the application interface corresponding to the answer extension function may be displayed on the call interface, such that the first terminal may directly display the corresponding application interface on the call interface according to the answer extension operation of the user, which is convenient for the user to implement corresponding application, simplifies the user operation, and also satisfies personalized needs of the user, and improves the user experience.

Fig. 9A is a block diagram of another device for displaying an answer extension function according to an exemplary embodiment. As shown in Fig. 9A, this embodiment is based on the embodiment shown in Fig. 8, and the answer extension function determining module 82 may include a first answer extension function determining sub-module 91.

The first answer extension function determining sub-module 91 is configured to determine the corresponding answer extension function according to a preset binding relationship between answer extension functions and corresponding answer extension operations, when the answer extension operation from the user on the call interface is detected.

Fig. 9B is a block diagram of another device for displaying an answer extension function according to an exemplary embodiment. As shown in Fig. 9B, this embodiment is based on the embodiment shown in Fig. 8 or 9A, and the device may further include a first setting module 92, a second setting module 93 and a binding module 94.

The first setting module 92 is configured to set at least one answer extension function.

The second setting module 93 is configured to set the answer extension operation corresponding to the answer extension function.

The binding module 94 is configured to bind the answer extension function with the corresponding answer extension operation, so as to obtain the preset binding relationship between answer extension functions and corresponding answer extension operations.

It may be seen from the above embodiment that, different answer extension functions and corresponding answer extension operations may be set, and the answer extension function may be bound with the corresponding answer extension operation, so as to obtain the preset biding relationship and the answer extension function corresponding to the detected answer extension operation may be determined according to the preset binding relationship, such that the first terminal may quickly determine the type of the answer extension function, thus enhancing the speed of displaying the answer extension function.

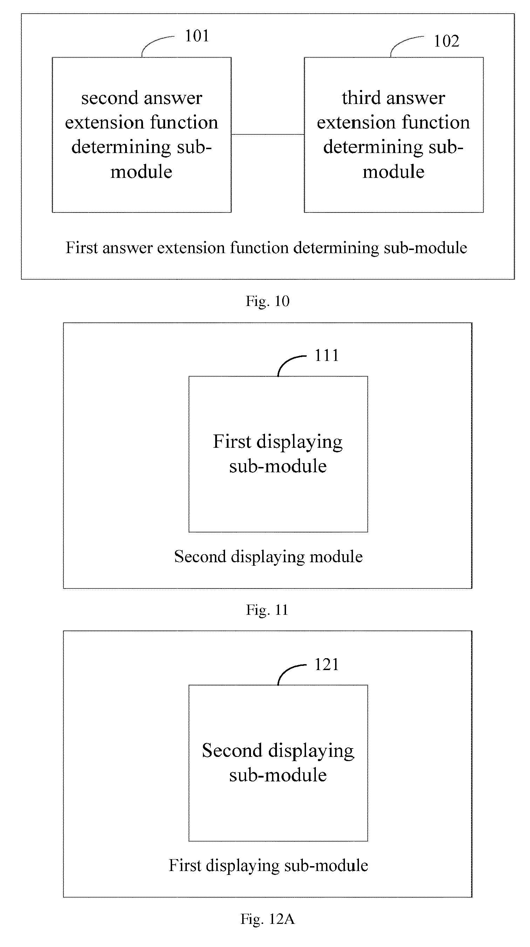

Fig. 10 is a block diagram of another device for displaying an answer extension function according to an exemplary embodiment. As shown in Fig. 10, this embodiment is based on the embodiment shown in Fig. 9A, the answer extension operation includes a sliding operation in a first direction or a sliding operation in a second direction, for example, the first direction is leftwards, and the second direction is rightwards, and the first answer extension function determining sub-module 91 may include a second answer extension function determining sub-module 101 and a third answer extension function determining sub-module 102.

The second answer extension function determining sub-module 101 is configured to determine the answer extension function as a first answer extension function according to the preset binding relationship, when the answer extension operation is the sliding operation in the first direction.

The third answer extension function determining sub-module 102 is configured to determine the answer extension function as a second answer extension function according to the preset binding relationship, when the answer extension operation is the sliding operation in the second direction.

The first answer extension function is an information recording function and the second answer extension function is a location sharing function; or the first answer extension function is the location sharing function and the second answer extension function is the information recording function.

It may be seen from the above embodiment that, when the sliding operation in the first direction or the sliding operation in the second direction is detected, the corresponding answer extension function may be determined as the information recording function or the location sharing function according to the preset binding relationship, such that the first terminal may display the corresponding application interface on the call interface according to the user's shortcut operation, i.e., the sliding operation in the first direction or the sliding operation in the second direction, which is convenient for the user to implement the corresponding application, and improves the user experience.

Fig. 11 is a block diagram of another device for displaying an answer extension function according to an exemplary embodiment. As shown in Fig. 11, this embodiment is based on the embodiment shown in Fig. 8, and the answer extension function determined is the information recording function, the second displaying module 82 may include a first displaying sub-module 111.

The first displaying sub-module 111 is configured to call the answer extension function via an open extension function interface on the call interface, and to display the application interface corresponding to the answer extension function on the call interface.

It may be seen from the above embodiment that, the answer extension function may be called via the open extension function interface on the call interface and the application interface corresponding to the answer extension function may be displayed on the call interface, which is convenient for the user to realize the answer extension function and improves the user experience.

Fig. 12A is a block diagram of a device for displaying an answer extension function according to an exemplary embodiment. As shown in Fig. 12A, this embodiment is based on the embodiment shown in Fig. 10 or 11, and the answer extension function determined is the information recording function, the first displaying sub-module 111 may include a second displaying sub-module 121.

The second displaying sub-module 121 is configured to call the information recording function via an open information recording interface on the call interface, and to display an information recording interface corresponding to the information recording function on the call interface.

It may be seen from the above embodiment that, the information recording function may be called via the open information recording interface on the call interface and the information recording interface corresponding to the information recording function may be displayed on the call interface, such that the first terminal may provide note service to the user, which satisfies the user's note-taking demand and improves the user experience.

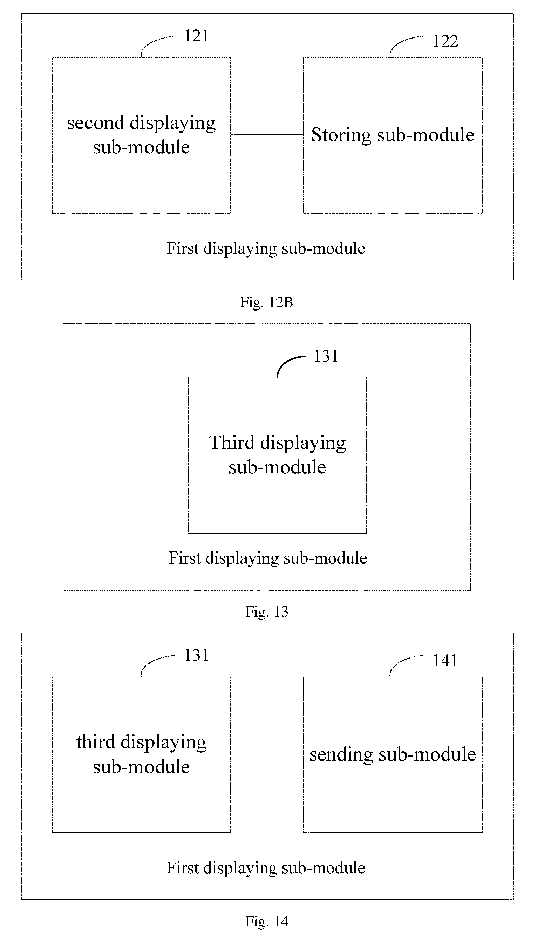

Fig. 12B is a block diagram of a device for displaying an answer extension function according to an exemplary embodiment. As shown in Fig. 12B, this embodiment is based on the embodiment shown in Fig. 12A, and the first displaying sub-module 111 may further include a storing sub-module 122.

The storing sub-module 122 is configured to store information recorded in the information recording interface into a note and to perform a note reminder when it is detected that the call with the second terminal ends.

It may be seen from the above embodiment that, the location sharing function may be called via the open location sharing interface on the call interface and the location sharing interface corresponding to the location sharing function may be displayed on the call interface, which satisfies the user's location sharing demand and improves the user experience.

Fig. 13 is a block diagram of another device for displaying an answer extension function according to an exemplary embodiment. As shown in Fig. 13, this embodiment is based on the embodiment shown in Fig. 10 or 11, the answer extension function determined is the location sharing function, and the first displaying sub-module 111 may include a third displaying sub-module 131.

The third displaying sub-module 131 is configured to call the location sharing function via an open location sharing interface on the call interface, and to display a location sharing interface corresponding to the location sharing function on the call interface.

Fig. 14 is a block diagram of another device for displaying an answer extension function according to an exemplary embodiment. As shown in Fig. 14, this embodiment is based on the embodiment shown in Fig. 13, and the first displaying sub-module 111 may further include a sending sub-module 141.

The sending sub-module 141 is configured to send first location sharing information to the second terminal via the location sharing interface when location sharing is determined, in which the first location sharing information carries a geographic location of the first terminal.

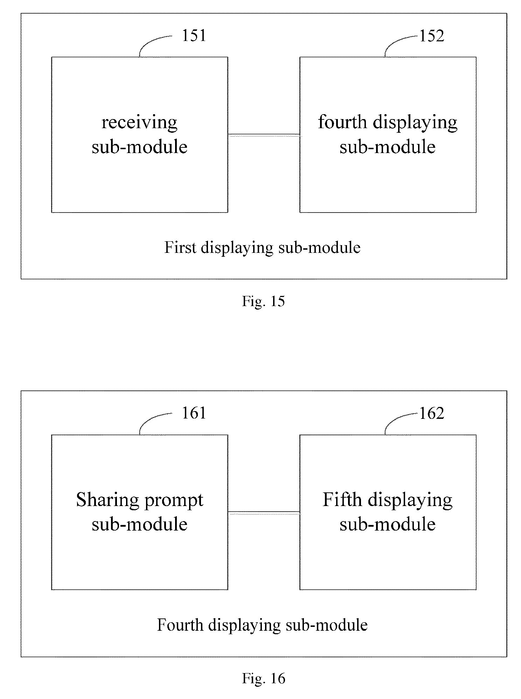

Fig. 15 is a block diagram of another device for displaying an answer extension function according to an exemplary embodiment. As shown in Fig. 15, this embodiment is based on the embodiment shown in Fig. 13 or 14, and the first displaying sub-module 111 may further include a receiving sub-module 151 and a fourth displaying sub-module 152.

The receiving sub-module 151 is configured to receive second location sharing information sent by the second terminal, in which the second location sharing information carries a geographic location of the second terminal.

The fourth displaying sub-module 152 is configured to display the geographic location of the second terminal on the location sharing interface.

It may be seen from the above embodiment that, the second location sharing information sent by the second terminal may be received, the second location sharing information carrying the geographic location of the second terminal, and the geographic location of the second terminal may be displayed on the location sharing interface, such that the first terminal may realize the location sharing with the second terminal according to the user demand, and display the geographic location of the second terminal visually in the location sharing interface, which further improves the user experience.

Fig. 16 is a block diagram of another device for displaying an answer extension function according to an exemplary embodiment. As shown in Fig. 16, this embodiment is based on the embodiment shown in Fig. 15, and the fourth displaying sub-module 152 may further include a sharing prompt sub-module 161 and a fifth displaying sub-module 162.

The sharing prompt sub-module 161 is configured to perform a sharing prompt according to the second location sharing information, in which the sharing prompt includes accepting sharing and refusing sharing.

The fifth displaying sub-module 162 is configured to display the geographic location of the second terminal on the location sharing interface, when the accepting sharing is determined.

Corresponding to Fig. 8, the present disclosure further provides another device for displaying an answer extension function. The device is applied in the first terminal and includes a processor and a memory for storing instructions executable by the processor, in which the processor is configured to:
display a call interface with a second terminal;
determine a corresponding answer extension function when detecting an answer extension operation from a user on the call interface;
display an application interface corresponding to the answer extension function on the call interface

Concerning the implementation of the function and action of individual unit in the devices in the above embodiments, reference is made to the implementation of corresponding steps of the above methods, which will not be elaborated herein.

Since the device embodiments substantially correspond to the method embodiments, reference is made to the description of the method embodiments as to details not disclosed in the device embodiments. The above-described device embodiments are merely for the purpose of illustration. Those units described as separated components may be or may not be physically separated; those units described as a display component may be or may not be a physical unit, i.e., either located at one place or distributed onto a plurality of network units. The object of the present disclosure may be achieved by part or all of modules in accordance with practical requirements. It would be appreciated and executable by those skilled in the art without creative labor.

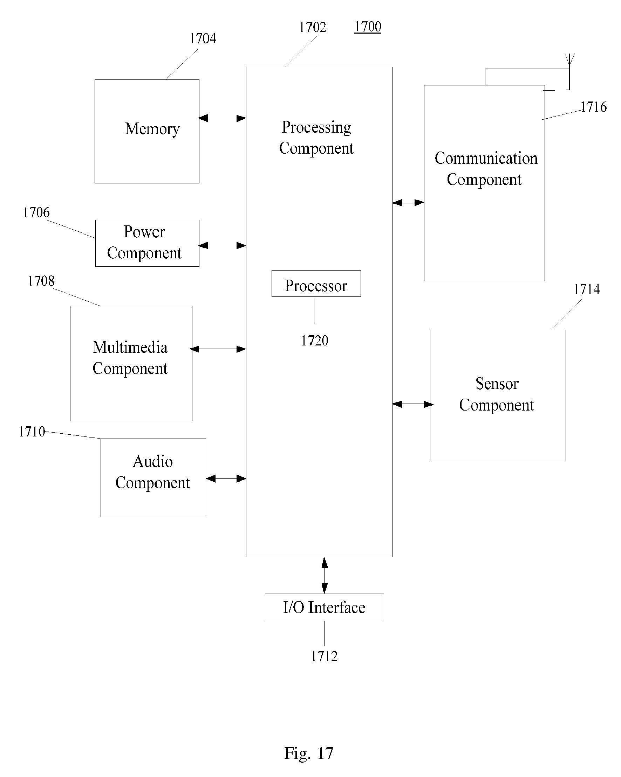

Fig. 17 is another block diagram of a device for displaying an answer extension function (a terminal device) according to an exemplary embodiment. For example, the device 1700 may be a mobile phone, a computer, a digital broadcast terminal, a messaging device, a gaming console, a tablet, a medical device, exercise equipment, a personal digital assistant, and the like.

Referring to Fig. 17, the device 1700 may include one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 may include one or more processors 1720 to execute instructions to perform all or part of the steps in the above described methods. Moreover, the processing component 1702 may include one or more modules which facilitate the interaction between the processing component 1702 and other components. For instance, the processing component 1702 may include a multimedia module to facilitate the interaction between the multimedia component 1708 and the processing component 1702.

The memory 1704 is configured to store various types of data to support the operation of the device 1700. Examples of such data include instructions for any applications or methods operated on the device 1700, contact data, phonebook data, messages, pictures, video, etc. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the device 1700. The power component 1706 may include a power management system, one or more power sources, and any other components associated with the generation, management, and distribution of power in the device 1700.

The multimedia component 1708 includes a screen providing an output interface between the device 1700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1708 includes a front camera and/or a rear camera. The front camera and/or the rear camera may receive an external multimedia datum while the device 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710 includes a microphone ("MIC") configured to receive an external audio signal when the device 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes one or more sensors to provide status assessments of various aspects of the device 1700. For instance, the sensor component 1714 may detect an open/closed status of the device 1700, relative positioning of components, e.g., the display and the keypad, of the device 1700, a change in position of the device 1700 or a component of the device 1700, a presence or absence of user contact with the device 1700, an orientation or an acceleration/deceleration of the device 1700, and a change in temperature of the device 1700. The sensor component 1714 may include a proximity sensor configured to detect the presence of nearby objects without any physical contact. The sensor component 1714 may also include a light sensor, such as a CMOS or CCD image sensor, for use in imaging applications. In some embodiments, the sensor component 1714 may also include an accelerometer sensor, a gyroscope sensor, a magnetic sensor, a pressure sensor, or a temperature sensor.

The communication component 1716 is configured to facilitate communication, wired or wirelessly, between the device 1700 and other devices. The device 1700 can access a wireless network based on a communication standard, such as WiFi, 2G, or 3G, or a combination thereof. In one exemplary embodiment, the communication component 1716 receives a broadcast signal or broadcast associated information from an external broadcast management system via a broadcast channel. In one exemplary embodiment, the communication component 1716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1704, executable by the processor 1720 in the device 1700, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for displaying an answer extension function, applied in a first terminal, and comprising:
displaying a call interface with a second terminal (110);
determining a corresponding answer extension function when detecting an answer extension operation from a user on the call interface (120);
displaying an application interface corresponding to the answer extension function on the call interface (130).

2. The method according to claim 1, wherein determining a corresponding answer extension function when detecting an answer extension operation from a user on the call interface (120) comprises:
determining the corresponding answer extension function according to a preset binding relationship between answer extension functions and corresponding answer extension operations, when detecting the answer extension operation from the user on the call interface (210).

3. The method according to claim 2, further comprising:
setting at least one answer extension function;
setting the answer extension operation corresponding to the answer extension function;
binding the answer extension function with the corresponding answer extension operation, so as to obtain the preset binding relationship between answer extension functions and corresponding answer extension operations.

4. The method according to claim 2 or 3, wherein the answer extension operation comprises a sliding operation in a first direction or a sliding operation in a second direction; determining the corresponding answer extension function according to a preset binding relationship between answer extension functions and corresponding answer extension operations (210) comprises:
determining the answer extension function as a first answer extension function according to the preset binding relationship, when the answer extension operation is the sliding operation in the first direction (310);
determining the answer extension function as a second answer extension function according to the preset binding relationship, when the answer extension operation is the sliding operation in the second direction (320),
in which, the first answer extension function is an information recording function and the second answer extension function is a location sharing function; or the first answer extension function is the location sharing function and the second answer extension function is the information recording function.

5. The method according to any one of claims 1 to 4, wherein displaying an application interface corresponding to the answer extension function on the call interface (130) comprises:
calling the answer extension function via an open extension function interface on the call interface, and displaying the application interface corresponding to the answer extension function on the call interface (410).

6. The method according to claim 5, wherein the answer extension function is the information recording function; calling the answer extension function via an open extension function interface on the call interface and displaying the application interface corresponding to the answer extension function on the call interface (410) comprises:
calling the information recording function via an open information recording interface on the call interface, and displaying an information recording interface corresponding to the information recording function on the call interface (510);
the method further comprises:
after displaying the application interface corresponding to the answer extension function on the call interface, storing information recorded in the information recording interface into a note and performing a note reminder when detecting that the call with the second terminal ends (520).

7. The method according to claim 5, wherein the answer extension function is the location sharing function; calling the answer extension function via an open extension function interface on the call interface and displaying the application interface corresponding to the answer extension function on the call interface (410) comprises:
calling the location sharing function via an open location sharing interface on the call interface, and displaying a location sharing interface corresponding to the location sharing function on the call interface (530);
the method further comprises:
after displaying the location sharing interface corresponding to the location sharing function on the call interface, sending first location sharing information to the second terminal via the location sharing interface when determining location sharing (610), in which the first location sharing information carries a geographic location of the first terminal;
the method further comprises:
after displaying the location sharing interface corresponding to the location sharing function on the call interface, receiving second location sharing information sent by the second terminal (620), in which the second location sharing information carries a geographic location of the second terminal;
displaying the geographic location of the second terminal on the location sharing interface (630);
wherein displaying the geographic location of the second terminal on the location sharing interface (630) comprises:
performing a sharing prompt according to the second location sharing information, in which the sharing prompt comprises accepting sharing and refusing sharing;
displaying the geographic location of the second terminal on the location sharing interface, when determining the accepting sharing.

8. A device for displaying an answer extension function, applied in a first terminal and comprising:
a first displaying module (81), configured to display a call interface with a second terminal;
an answer extension function determining module (82), configured to determine a corresponding answer extension function when an answer extension operation from a user on the call interface is detected;
a second displaying module (83), configured to display an application interface corresponding to the answer extension function on the call interface.

9. The device according to claim 8, wherein the answer extension function determining module (82) comprises:
a first answer extension function determining sub-module (91), configured to determine the corresponding answer extension function according to a preset binding relationship between answer extension functions and corresponding answer extension operations, when the answer extension operation from the user on the call interface is detected;

10. The device according to claim 9, further comprising:
a first setting module (92), configured to set at least one answer extension function;
a second setting module (93), configured to set the answer extension operation corresponding to the answer extension function;
a binding module (94), configured to bind the answer extension function with the corresponding answer extension operation, so as to obtain the preset binding relationship between answer extension functions and corresponding answer extension operations.

11. The device according to claim 9 or 10, wherein the answer extension operation comprises a sliding operation in a first direction or a sliding operation in a second direction; the first answer extension function determining sub-module (91) comprises:
a second answer extension function determining sub-module (101), configured to determine the answer extension function as a first answer extension function according to the preset binding relationship, when the answer extension operation is the sliding operation in the first direction;
a third answer extension function determining sub-module (102), configured to determine the answer extension function as a second answer extension function according to the preset binding relationship, when the answer extension operation is the sliding operation in the second direction,
in which, the first answer extension function is an information recording function and the second answer extension function is a location sharing function; or the first answer extension function is the location sharing function and the second answer extension function is the information recording function.

12. The device according to any one of claims 8 to 11, wherein the second displaying module (83) comprises:
a first displaying sub-module (111), configured to call the answer extension function via an open extension function interface on the call interface, and to display the application interface corresponding to the answer extension function on the call interface.

13. The device according to claim 12, wherein the answer extension function is the information recording function, and the first displaying sub-module (111) comprises:
a second displaying sub-module (121), configured to call the information recording function via an open information recording interface on the call interface, and to display an information recording interface corresponding to the information recording function on the call interface;
the first displaying sub-module (111) further comprises:
a storing sub-module (122), configured to store information recorded in the information recording interface into a note and to perform a note reminder when it is detected that the call with the second terminal ends.

14. The device according to claim 12, wherein the answer extension function is the location sharing function and the first displaying sub-module (111) comprises:
a third displaying sub-module (131), configured to call the location sharing function via an open location sharing interface on the call interface, and to display a location sharing interface corresponding to the location sharing function on the call interface;
the first displaying sub-module (111) further comprises:
a sending sub-module (141), configured to send first location sharing information to the second terminal via the location sharing interface when location sharing is determined, in which the first location sharing information carries a geographic location of the first terminal;
the first displaying sub-module (111) further comprises:
a receiving sub-module (151), configured to receive second location sharing information sent by the second terminal, in which the second location sharing information carries a geographic location of the second terminal;
a fourth displaying sub-module (152), configured to display the geographic location of the second terminal on the location sharing interface;
the fourth displaying sub-module (152) comprises:
a sharing prompt sub-module (161), configured to perform a sharing prompt according to the second location sharing information, in which the sharing prompt comprises accepting sharing and refusing sharing;
a fifth displaying sub-module (162), configured to display the geographic location of the second terminal on the location sharing interface, when the accepting sharing is determined.

15. A computer program, which when executed on a processor, performs the method for displaying an answer extension function according to any one of claims 1 to 7.
